# EUROPÄISCHE PATENTSCHRIFT

(11) **EP 3 919 299 B1**
(45) Veröffentlichungstag und Bekanntmachung des Hinweises auf die Patenterteilung: **06.08.2025**
(21) Anmeldenummer: 20178060.8
(22) Anmeldetag: 03.06.2020
(51) Int. Cl.: B60H 1/00, F25B 41/00, F16L 55/07, F01P 11/04

(54) **ROHRANORDNUNG FÜR DEN TRANSPORT VON TEMPERIERMEDIUM**
PIPE ASSEMBLY FOR THE TRANSPORT OF TEMPERATURE CONTROL MEDIUM
AGENCEMENT TUBULAIRE POUR LE TRANSPORT D'UN MILIEU DE MISE EN TEMPÉRATURE

(43) Veröffentlichungstag der Anmeldung: 08.12.2021
(73) Patentinhaber: TI Automotive Technology Center GmbH, 76437 Rastatt (DE)
(72) Erfinder: Boecker, Albert, 76275 Ettlingen (DE); Winter, Matthias, 76437 Rastatt (DE); Schaefer, Thorsten, 76889 Steinfeld (DE); Deibel, Florian, 76547 Sinzheim (DE)
(74) Vertreter: Novagraaf Group

(56) Entgegenhaltungen:
- WO-A1-01/12415
- DE-U1- 202015 106 952
- GB-A- 2 239 302
- JP-A- H0 524 101

## Beschreibung

### Rohranordnung für den Transport von Temperiermedium

Die Erfindung betrifft eine Rohranordnung für den Transport von Temperiermedium sowie einen Temperierkreislauf. Die Erfindung betrifft ferner ein Verfahren zur Herstellung einer Rohranordnung für den Transport von Temperiermedium.

Temperiermedien werden in der Elektromobilität benötigt. Akkumulatoren von Elektrofahrzeugen, insbesondere Lithium-Ionen-Akkumulatoren weisen eine optimale Leistungsfähigkeit nur innerhalb eines begrenzten Temperaturspektrums auf. Daher kann es je nach Umgebungstemperatur erforderlich sein, die Akkumulatoren zu erwärmen oder zu kühlen. Daher weist die Antriebseinheit eines Elektrofahrzeugs in der Regel einen Temperierkreislauf mit einer Rohranordnung auf, durch welchen Temperiermedien zu den Zellen des Akkumulators geleitet werden können, um diese innerhalb eines gewünschten Temperaturspektrums zu temperieren. Aufgrund der Beschränkungen des Bauraums soll die Temperiereinrichtung dabei möglichst kompakt sein.

Des Weiteren kann es erforderlich sein, Komponenten der gesamten Antriebseinheit von Elektrofahrzeugen zu temperieren, insbesondere zu kühlen. Hierzu gehören neben dem Akkumulator die Leistungselektronik und der Elektromotor. Die Ladeelektronik und die dazugehörigen Steckverbindungen und Leitungen können ebenfalls mittels der Temperiereinrichtung gekühlt werden. Dies ist insbesondere im Zusammenhang mit Schnellladevorgängen relevant.

Neben dem Einsatz in einer Antriebseinheit ergibt sich ein weiteres Einsatzgebiet im Zusammenhang mit der übrigen Fahrzeugelektronik, hier insbesondere von Sensoren und Bordcomputern. Ist ein Fahrzeug zum Autonomen Fahren ausgerüstet, werden leistungsfähige Sensoren und leistungsfähige Rechner benötigt, wobei die System redundant vorhanden sind. Dadurch, dass der Bauraum beschränkt ist, ergibt sich auch bei diesen System ein Bedarf zur Temperierung/Kühlung durch eine Temperiereinrichtung.

Temperiermedien kommen ferner in Klimaanlagen zum Einsatz. Klimaanlagen, insbesondere mobile Klimaanlagen, umfassen eine Rohranordnung, welche den Transport von Temperiermedium zwischen den einzelnen Aggregaten der Klimaanlage ermöglicht. Bei mobilen Klimaanlagen, beispielsweise bei Klimaanlagen für die Klimatisierung von Innenräumen von Kraftfahrzeugen, ist die Rohranordnung ein vergleichsweise komplexes Gebilde und umfasst häufig Rohre aus verschiedenen Materialien, beispielsweise Rohre aus Metall, Rohrabschnitte aus thermoplastischem Kunststoff und Rohrabschnitte aus gummiartigem Material. Zwar können hierbei die Einsatzbedingungen der Rohrabschnitte optimal auf die jeweiligen Anforderungen abgestimmt werden, die Rohranordnung ist jedoch kostenintensiv, aufwendig in der Montage und schwierig zu recyceln.

Aus JP H05 24101 A ist eine Methode zur Herstellung einer Rohranordnung mit einer Haupt- und einer Nebenleitung bekannt. Haupt- und Nebenleitung werden in voneinander unabhängigen Kavitäten durch jeweils einen Vorformling hergestellt und anschließend miteinander verbunden. Schließlich wird eine Strömungsverbindung zwischen Haupt- und Nebenleitung hergestellt. Weitere Rohranordnungen sind aus der WO 01/12415 A1, GB 2239302 A und DE 202015106952 U1 bekannt.

Der Erfindung liegt die Aufgabe zugrunde, eine Rohranordnung für den Transport von Temperiermedium bereitzustellen, welche einfach und kostengünstig herstellbar ist.

Diese Aufgabe wird mit den Merkmalen der Ansprüche 1, 7, 9 und 10 gelöst. Auf vorteilhafte Ausgestaltungen nehmen die jeweils darauf rückbezogenen Unteransprüche Bezug.

Zur Lösung der Aufgabe umfasst die Rohranordnung für den Transport von Temperiermedium einen mittels Blasformen hergestellten Grundkörper aus polymerem Werkstoff, wobei in dem Grundkörper zumindest ein Funktionselement angeordnet ist, welches mit dem Temperiermedium in Wirkverbindung steht.

Rohranordnungen von Temperierkreisläufen enthalten mehrere für die Funktionsfähigkeit der Klimaanlage erforderliche Funktionselemente. Dies sind beispielsweise Drosselventile, Rückschlagventile, schaltbare Ventile, Pumpen, Durchflusssensoren und Temperatursensoren. Bei der erfindungsgemäßen Rohranordnung sind zumindest einige der Funktionselemente in dem Grundkörper, also innerhalb der Rohranordnung, angeordnet, so dass diese mit dem Temperiermedium in Kontakt stehen.

Die Rohranordnung besteht aus einem mittels Blasformen hergestellten Grundkörper aus polymerem Material. Durch das Blasformen ist es möglich, einen Grundkörper mit einer komplexen Gestalt herzustellen. Beispielsweise kann der Grundkörper einen oder mehrere Kanäle umfassen, welche in der für den Montageort erforderlichen Gestalt geformt, beispielsweise gekrümmt, sein können. Des Weiteren ist es besonders einfach, Querschnittsänderungen in die Kanäle einzuformen. Beispielsweise können Abschnitte der Kanäle kreisförmig sein, wohingegen andere Abschnitte der Kanäle nicht rund, beispielsweise oval oder rechteckig, ausgebildet sind. Dadurch kann die Rohranordnung besonders platzsparend ausgebildet und an den Montageort angepasst sein. Dadurch, dass die Funktionselemente direkt in den Grundkörper integriert sind, ist die Montage einfach und kostengünstig.

Der Grundkörper umfasst zumindest einen Kanal, wobei das zumindest eine Funktionselement erfindungsgemäß dem Kanal zugeordnet ist. Dadurch steht das Funktionselement in unmittelbarem Kontakt mit dem Temperiermedium und kann entweder direkt den Volumenstrom des Temperiermediums beeinflussen oder direkt Zustandsdaten des Temperiermediums, wie Temperatur, Volumenstrom oder Druck, erfassen. Das Funktionselement kann auch als Kühler ausgebildet sein, welches in Kontakt mit dem Temperiermedium steht und welches die Temperatur des Temperiermediums beeinflusst.

Der Grundkörper weist mehrere Kanäle auf, wobei sich zwischen den Kanälen eine Kanalwand befinden kann. Dadurch kann der Grundkörper verschiedene Rohrabschnitte eines Temperierkreislaufs aufnehmen, beispielsweise den Kanalabschnitt vor und hinter einem Verdampfer. Durch die Kanalwand sind beide Volumenströme voneinander getrennt.

Je nach Anzahl und Ausgestaltung der Kanäle kann die Rohranordnung auch als Verteiler und/oder Konnektor fungieren.

Zumindest ein Funktionselement kann aus dem Grundkörper ausgeformt sein. Dies ist insbesondere dann denkbar, wenn das Funktionselement ein passives Funktionselement ist und keinerlei bewegliche Teile aufweist. Beispielsweise kann das Funktionselement ein Drosselventil bilden. Ein Drosselventil, beziehungsweise Expansionsventil, bewirkt durch eine lokale Verengung des Strömungsquerschnitts eine Verminderung des Drucks des durchfließenden Temperiermediums und bewirkt gleichzeitig eine Expansion des Temperiermediums. Das Drosselventil ist dabei als ungeregeltes Drosselventil ausgebildet und bildet eine Einschnürung des Kanals. Dadurch, dass das Drosselventil direkt aus dem Grundkörper ausgeformt ist, ist die Rohranordnung besonders kostengünstig und einfach herstellbar. Das Funktionselement kann auch als Fluidverteilungselement ausgebildet sein. Ferner ist denkbar, dass das Funktionselement als Verbindungselement oder Konnektor ausgebildet ist. Dadurch kann die Rohranordnung ausgerüstet sein, mit weiteren Komponenten eines Temperierkreislaufs verbunden zu werden.

Zumindest ein Funktionselement kann separat von dem Grundkörper ausgebildet sein. Vorzugsweise sind von dem Grundkörper separat Funktionselemente ausgebildet, welche Komponenten aus nicht-thermoplastischem Material aufweisen und/oder aktiv steuerbar sind. Derartige Funktionselemente sind beispielsweise Drosselventile aus metallischem Material, schaltbare Ventile, Rückschlagventile mit metallischem Federkörper, Sensoren, beispielsweise Temperatursensoren, Drucksensoren oder Durchflusssensoren, Pumpen, Verbindungselemente oder Konnektoren zum Verbinden der Rohranordnung mit Aggregaten oder dergleichen. Dabei sind die separat ausgebildeten Funktionselemente innerhalb des Grundkörpers angeordnet. Der Grundkörper wiederum besteht aus einem mittels Blasformen hergestellten Grundkörper aus polymerem Werkstoff, welcher materialeinheitlich und einstückig ausgebildet ist. Die separat ausgebildeten Funktionselemente sind dabei vor dem Ausformen des Grundkörpers im Blasformverfahren im Inneren des den Grundkörper bildenden Rohlings plaziert. Nach dem Ausformen mittels Blasformen sind die strömungstechnischen Funktionselemente ortsfest in dem Grundkörper angeordnet. Dadurch ist die Herstellung einer funktionalen Rohranordnung mit komplexer Geometrie mit einfachen Verfahrensschritten möglich.

In einer erfindungsgemäßen Verwendung bildet die Rohranordnung einen Teil eines Temperierkreislaufs.

Gemäß einer ersten Ausgestaltung ist die Rohranordnung Teil eines Klimakreislaufs einer Klimaanlage. Dabei kann die Klimaanlage insbesondere als mobile Klimaanlage ausgebildet sein. Die mobile Klimaanlage wiederum kann Bestandteil eines Kraftfahrzeugs sein, wobei die Klimaanlage der Klimatisierung des Fahrzeuginnenraums dient. Dadurch, dass der Grundkörper der Rohranordnung zwar eine komplexe Geometrie aufweisen und mehrere strömungstechnische Funktionselemente beinhalten kann, ist die Rohranordnung dennoch einfach zu montieren und weist nur wenige Teile auf. Insofern vereinfacht die erfindungsgemäße Rohranordnung die Komplexität insbesondere einer mobilen Klimaanlage eines Kraftfahrzeugs. Dies ist insbesondere in Bezug auf elektrisch angetriebene Kraftfahrzeuge vorteilhaft, da diese aufgrund des für den Elektroantrieb erforderlichen Akkumulators nur über einen sehr beschränkten Bauraum verfügen. Das Blasformverfahren ermöglicht es, dass die Rohranordnung an den zur Verfügung stehenden Bauraum angepasst ist, wobei die Kanäle für den Transport von Temperiermedium so bemessen sind, dass ein optimaler Transport von Temperiermedium möglich ist.

Gemäß einer zweiten Ausgestaltung ist die Rohranordnung Teil eines Temperierkreislaufs der Antriebseinheit eines Elektrofahrzeugs. Dabei führt die Rohranordnung den zu temperierenden Elementen der Antriebseinheit Temperiermedium zu, so dass die Elemente innerhalb eines gewünschten Temperaturspektrums temperiert werden können. Beispielsweise können die Akkumulatoren je nach Anforderung erwärmt oder gekühlt werden. Des Weiteren können Komponenten der Leistungselektronik und auch Steckverbindungen mittels Temperiermedium gekühlt werden. Die Kühlung von Steckverbindungen ist dabei insbesondere bei Schnellladevorgängen vorteilhaft, da beim Schnellladen aufgrund der hohen Ladeströme starke Erwärmungen an Steckverbindungen auftreten können. Dadurch, dass die Rohranordnung im Blasformen geformt ist, kann die Rohranordnung in einer großen Formenvielfalt hergestellt werden. Dies ist insbesondere im Hinblick auf den für eine Rohranordnung beschränkten und komplex geformten Bauraum der zuvor genannten Komponenten vorteilhaft.

Bei einem erfindungsgemäßen Verfahren zur Herstellung einer Rohranordnung für den Transport von Temperiermedium gemäß einer ersten Ausgestaltung wird ein aus polymerem Material bestehender Vorformling bereitgestellt, wobei der Vorformling in einer Blasform angeordnet wird und die Rohranordnung mittels Blasformverfahren ausgeformt wird, wobei die Blasform derart ausgebildet ist, dass in die Rohranordnung zumindest ein strömungstechnisches Funktionselement eingeformt wird. Das erfindungsgemäße Verfahren eignet sich insbesondere dazu, eine Rohranordnung für den Klimakreislauf einer Klimaanlage bereitzustellen, wobei das strömungstechnische Funktionselement als Drosselventil ausgebildet ist, welches direkt in einen Kanal der Rohranordnung eingeformt wird.

Bei einem erfindungsgemäßen Verfahren zur Herstellung einer Rohranordnung für den Transport von Temperiermedium gemäß einer zweiten Ausgestaltung wird zunächst ein aus polymerem Material bestehender Vorformling und zumindest ein im Inneren der Rohranordnung anzuordnendes Funktionselement bereitgestellt, wobei das zumindest eine Funktionselement im Inneren des Vorformlings angeordnet wird, wobei der Vorformling mit den darin angeordneten, zumindest einem, Funktionselementen in einer Blasform angeordnet wird und die Rohranordnung mittels eines Blasformverfahrens ausgeformt wird. Dementsprechend wird das Funktionselement in dem Grundkörper angeordnet, bevor dieser im Blasformverfahren seine endgültige Form erhält. Aufgrund des plastischen Verformens des Materials des Grundkörpers können die Funktionselemente fest in das Innere des Grundkörpers eingebettet werden. Dadurch sind die Elemente verliersicher und ortsfest in dem Grundkörper plaziert. Dadurch, dass die Funktionselemente direkt in den Grundkörper integriert sind, erleichtert sich die Montage der Rohranordnung. Des Weiteren stehen die Funktionselemente durch die Anordnung im Inneren der Rohranordnung direkt in Wirkverbindung mit dem Temperiermedium.

Es ist auch denkbar, dass ein erstes Funktionselement während des Blasformverfahrens direkt in den Grundkörper eingeformt wird, während ein zweites Funktionselement vor dem Ausformen im Inneren des Vorformlings angeordnet wird und seinen Platz nach Abschluss des Blasformverfahrens erhält. Insofern werden die beiden oben genannten Verfahren kombiniert. Dadurch ist es beispielsweise möglich, während des Blasformverfahrens ein Drosselventil in einem Kanal der Rohranordnung auszubilden und weitere Funktionselemente, wie Rückschlagventile, Sensoren, Pumpen oder Anschlussblöcke, in dem Grundkörper zu plazieren.

Einige Ausgestaltungen der erfindungsgemäßen Rohranordnung werden nachfolgenden anhand der Figuren näher erläutert. Diese zeigen, jeweils schematisch:
- Fig. 1: eine Rohranordnung mit einem in den Grundkörper eingeformten Drosselventil;
- Fig. 2: eine Rohranordnung mit mehreren separat ausgebildeten Funktionselementen;
- Fig. 3: eine weitere Rohranordnung mit mehreren separat ausgebildeten Funktionselementen.

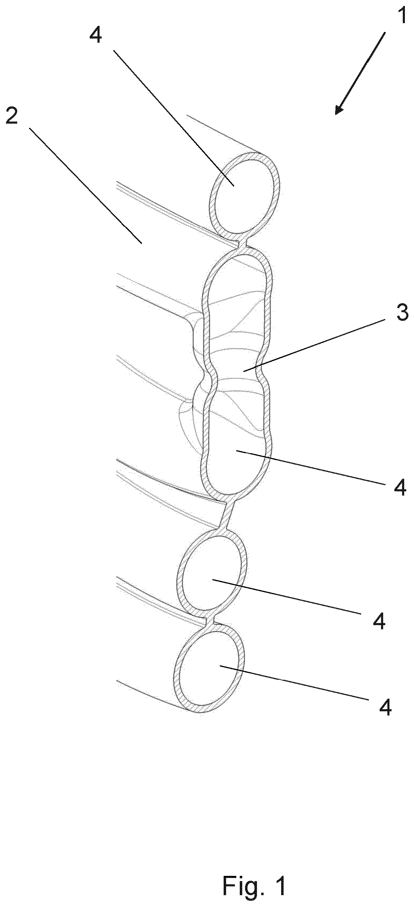

Figur 1 zeigt eine Rohranordnung 1 für den Transport von Temperiermedium, umfassend einen mittels Blasformen hergestellten Grundkörper 2 aus polymerem Werkstoff. **In** dem Grundkörper 2 ist zumindest ein Funktionselement 3 angeordnet, welches mit dem Temperiermedium in Wirkverbindung steht. Das Funktionselement 3 ist in einem Kanal 4 angeordnet, wobei das Funktionselement 3 einstückig aus dem Grundkörper 2 ausgeformt ist. Das Funktionselement 3 bildet ein Drosselventil und ist durch eine Querschnittsverengung des Kanals 4 ausgebildet.

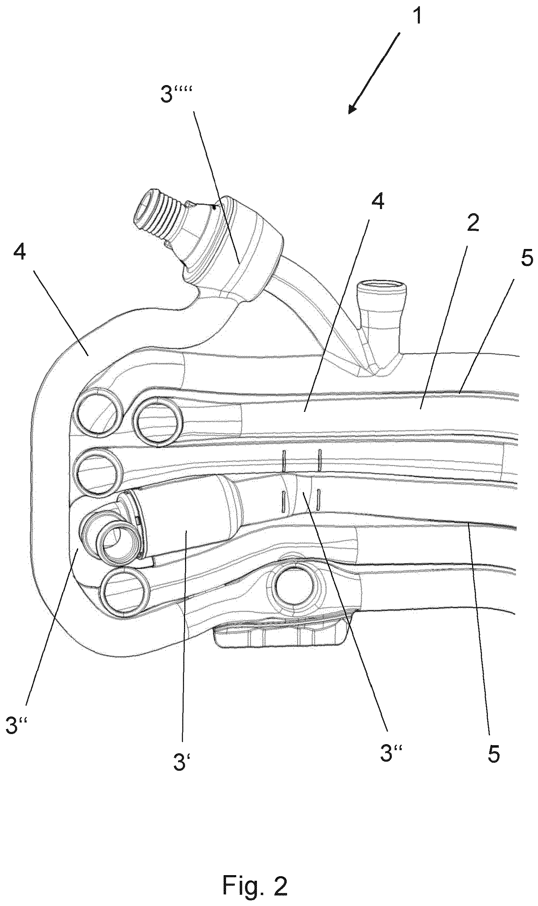

Figur 2 zeigt eine Rohranordnung 1 gemäß Figur 1, wobei der Grundkörper 2 mehrere Funktionselemente 3 umfasst, welche separat von dem Grundkörper 2 ausgebildet und im Inneren des Grundkörpers 2 angeordnet sind. Der Grundkörper 2 weist mehrere Kanäle 4 auf, wobei sich zwischen den Kanälen 4 jeweils eine Kanalwand 5 befindet.

Die Rohranordnung 1 umfasst mehrere Funktionselemente 3, unter anderem ein Rückschlagventil 3', einen Temperatursensor, einen Drucksensor, einen Durchflusssensor sowie einen Konnektor in Form eines Anschlussblocks 3" zum Anschluss der Rohranordnung 1 an angrenzende Aggregate oder Rohrleitungen. Des Weiteren weist die Rohranordnung 1 ein direkt in einen Kanal 4 eingeformtes Drosselventil 3‴ auf, welches materialeinheitlich und einstückig aus dem Grundkörper 2 ausgeformt ist.

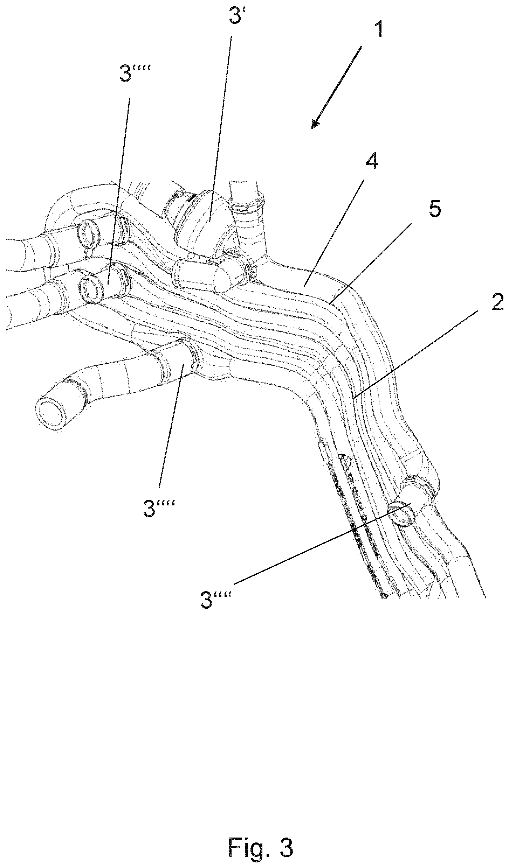

Figur 3 zeigt eine alternative Ausgestaltung der in Figur 2 gezeigten Rohranordnung 1. **In** die Rohranordnung 1 sind mehrere Funktionselemente 3 in Form eines Rückschlagventils 3' und mehrerer Konnektoren 3ʺʺ eingebracht.

Die in den Figuren 1 bis 3 gezeigten Rohranordnungen 1 bilden einen Bestandteil eines Klimakreislaufs einer Klimaanlage, wobei die Klimaanlage als mobile Klimaanlage eines Kraftfahrzeugs ausgebildet ist. Gemäß einer weiteren Ausgestaltung bilden die Rohranordnungen 1 einen Bestandteil eines Temperierkreislaufs der Antriebseinheit eines Elektrofahrzeugs, wobei die Rohranordnungen 1 Temperiermedium den Zellen der Akkumulatoren sowie den elektrischen Steuerungskomponenten und Steckverbindungen zuführt.

In einer weiteren Ausgestaltung ist die Rohranordnung 1 Bestandteil einer Temperiereinrichtung, welches eingerichtet ist, Komponenten der Antriebseinheit von Elektrofahrzeugen zu temperieren. Hierzu gehören neben dem Akkumulator die Leistungselektronik und die Elektromotoren. Des Weiteren ist die Temperiereinrichtung eingerichtet, die Ladeelektronik und die dazugehörigen Steckverbindungen und Leitungen zu kühlen, was insbesondere im Zusammenhang mit Schnellladevorgängen vorteilhaft ist.

Ferner kann die Temperiereinrichtung eingerichtet sein, Komponenten der übrigen Fahrzeugelektronik zu temperieren, insbesondere zu kühlen. Derartige Komponenten sind beispielsweise Sensoren und Rechner für das autonome Fahren sowie Bordcomputer.

Bei dem Verfahren zur Herstellung einer Rohranordnung 1 gemäß Figur 1 wird ein aus polymerem Material bestehender Vorformling bereitgestellt, wobei der Vorformling in einer Blasform angeordnet wird und die Rohranordnung 1 mittels Blasformverfahren ausgeformt wird. Dabei ist die Blasform derart ausgebildet, dass in die Rohranordnung 1 das Funktionselement 3 eingeformt wird.

Bei dem Verfahren zur Herstellung einer Rohranordnung 1 gemäß Figur 2 wird zunächst ein aus polymerem Material bestehender Vorformling zumindest eines im Inneren der Rohranordnung 1 anzuordnenden Funktionselements 3 bereitgestellt, wobei das zumindest eine Funktionselement 3 im Inneren des Vorformlings angeordnet wird, wobei der Vorformling mit dem darin angeordneten zumindest einen Funktionselement 3 in einer Blasform angeordnet wird und die Rohranordnung 1 mittels eines Blasformverfahrens ausgeformt wird. Das Drosselventil 3‴ wird dabei während des Blasformens aus dem Grundkörper 2 ausgebildet. Demensprechend ist auch bei diesem Verfahren die Blasform derart ausgebildet, dass in die Rohranordnung 1 das Funktionselement 3 in Form des Drosselventils 3‴ eingeformt wird.

## Patentansprüche

1. Rohranordnung für den Transport von Temperiermedium, umfassend einen mittels Blasformen hergestellten Grundkörper (2) aus polymerem Werkstoff, wobei in dem Grundkörper (2) zumindest ein Funktionselement (3) angeordnet ist, welches mit dem Temperiermedium in Wirkverbindung steht, **dadurch gekennzeichnet, dass** der Grundkörper (2) mehrere Kanäle (4) aufweist, wobei sich zwischen den Kanälen (4) zumindest eine Kanalwand (5) befindet, wobei das zumindest eine Funktionselement (3) einem Kanal (4) zugeordnet ist.

2. Rohranordnung nach Anspruch 1, **dadurch gekennzeichnet, dass** der Grundkörper (2) mehrere Funktionselemente (3) umfasst.

3. Rohranordnung nach Anspruch 1 oder 2, **dadurch gekennzeichnet, dass** zumindest ein Funktionselement (3) aus dem Grundkörper (2) ausgeformt ist.

4. Rohranordnung nach Anspruch 3, **dadurch gekennzeichnet, dass** das aus dem Grundkörper (2) ausgeformte Funktionselement (3) ein Drosselventil (3‴), Verbindungselement oder Konnektor bildet.

5. Rohranordnung nach einem der Ansprüche 1 oder 2, **dadurch gekennzeichnet,**
**dass** zumindest ein Funktionselement (3) separat von dem Grundkörper (2) ausgebildet ist.

6. Rohranordnung nach Anspruch 5, **dadurch gekennzeichnet, dass** das separat von dem Grundkörper (2) ausgebildete Funktionselement (3) als Ventil, Drosselventil (3"'), Rückschlagventil (3'), Sensor, Pumpe, Verbindungselement oder Konnektor (3ʺʺ) ausgebildet ist.

7. Temperierkreislauf, umfassend eine Rohranordnung (1) nach einem der vorherigen Ansprüche.

8. Temperierkreislauf gemäß Anspruch 7, wobei der Temperierkreislauf in einer mobilen Einrichtung angeordnet ist.

9. Verfahren zur Herstellung einer Rohranordnung (1) für den Transport von Temperiermedium gemäß einem der Ansprüche 1-6, wobei die Rohranordnung einen Grundkörper (2) mit mehreren Kanäle (4) aufweist, wobei sich zwischen den Kanälen (4) zumindest eine Kanalwand (5) befindet, bei welchem ein aus polymerem Material bestehender Vorformling bereitgestellt wird, wobei der Vorformling in einer Blasform angeordnet wird und die Rohranordnung (1) mittels Blasformverfahren ausgeformt wird, wobei die Blasform derart ausgebildet ist, dass in die Rohranordnung (1) zumindest ein Funktionselement (3) eingeformt wird.

10. Verfahren zur Herstellung einer Rohranordnung (1) für den Transport von Temperiermedium gemäß einem der Ansprüche 1-6, wobei die Rohranordnung einen Grundkörper (2) mit mehreren Kanäle (4) aufweist, wobei sich zwischen den Kanälen (4) zumindest eine Kanalwand (5) befindet, bei welchem zunächst ein aus polymerem Material bestehender Vorformling und zumindest ein im Inneren der Rohranordnung (1) anzuordnendes Funktionselement (3) bereitgestellt wird, wobei das zumindest eine Funktionselement (3) im Inneren des Vorformlings angeordnet wird, wobei der Vorformling mit dem darin angeordneten zumindest einen Funktionselement (3) in einer Blasform angeordnet wird und die Rohranordnung (1) mittels eines Blasformverfahrens ausgeformt wird.

11. Verfahren nach Anspruch 10, **dadurch gekennzeichnet, dass** die Blasform derart ausgebildet ist, dass beim Ausformen der Rohranordnung (1) mittels Blasformen in die Rohranordnung (1) zumindest ein Funktionselement (3) eingeformt wird.

## Claims

1. Pipe arrangement for the transport of temperature control medium, comprising a main body (2) made of polymer material and produced by means of blow molding, at least one functional element (3) being arranged in the main body (2), which functional element is in operative connection with the temperature control medium, **characterized in that** the main body (2) has a plurality of channels (4), at least one channel wall (5) being located between the channels (4), the at least one functional element (3) being assigned to a channel (4).

2. Pipe arrangement according to claim 1, **characterized in that** the main body (2) comprises a plurality of functional elements (3).

3. Pipe arrangement according to claim 1 or 2, **characterized in that** at least one functional element (3) is molded from the main body (2).

4. Pipe arrangement according to claim 3, **characterized in that** the functional element (3) molded from the main body (2) forms a throttle valve (3"'), connecting element or connector.

5. Pipe arrangement according to one of claims 1 or 2,
**characterized**
**in that** at least one functional element (3) is formed separately from the main body (2).

6. Pipe arrangement according to claim 5, **characterized in that** the functional element (3) formed separately from the main body (2) is designed as a valve, throttle valve (3"'), check valve (3'), sensor, pump, connecting element or connector (3"").

7. Temperature control circuit comprising a pipe arrangement (1) according to any of the preceding claims.

8. Temperature control circuit according to claim 7,
wherein the temperature control circuit is arranged in a mobile device.

9. Method for producing a pipe arrangement (1) for the transport of temperature control medium according to any of claims 1-6, wherein the pipe arrangement has a main body (2) comprising a plurality of channels (4), wherein at least one channel wall (5) is located between the channels (4), in which channel wall a preform consisting of polymer material is provided, wherein the preform is arranged in a blow mold and the pipe arrangement (1) is molded by means of a blow molding process, wherein the blow mold is designed such that at least one functional element (3) is molded into the pipe arrangement (1).

10. Method for producing a pipe arrangement (1) for the transport of temperature control medium according to any of claims 1-6, wherein the pipe arrangement has a main body (2) comprising a plurality of channels (4), wherein at least one channel wall (5) is located between the channels (4), in which channel wall a preform consisting of polymer material and at least one functional element (3) to be arranged in the interior of the pipe arrangement (1) are first provided, wherein the at least one functional element (3) is arranged in the interior of the preform, wherein the preform having the at least one functional element (3) arranged therein is arranged in a blow mold and the pipe arrangement (1) is molded by means of a blow molding process.

11. Method according to claim 10, **characterized in that** the blow mold is designed such that during molding of the pipe arrangement (1) at least one functional element (3) is molded into the pipe arrangement (1) by means of blow molding.

## Revendications

1. Agencement de tubes pour le transport d'un fluide de régulation de température, comprenant un corps de base (2) en matériau polymère fabriqué au moyen d'un moulage par soufflage, dans lequel au moins un élément fonctionnel (3) est disposé dans le corps de base (2), lequel élément fonctionnel est en liaison fonctionnelle avec le fluide de régulation de température, **caractérisé en ce que** le corps de base (2) présente plusieurs canaux (4), dans lequel au moins une paroi de canal (5) se trouve entre les canaux (4), dans lequel l'au moins un élément fonctionnel (3) est associé à un canal (4).

2. Agencement de tubes selon la revendication 1, **caractérisé en ce que** le corps de base (2) comprend plusieurs éléments fonctionnels (3).

3. Agencement de tubes selon la revendication 1 ou 2,
**caractérisé en ce qu'au** moins un élément fonctionnel (3) est formé à partir du corps de base (2).

4. Agencement de tubes selon la revendication 3, **caractérisé en ce que** l'élément fonctionnel (3) formé à partir du corps de base (2) forme une soupape d'étranglement (3"'), un élément de liaison ou un connecteur.

5. Agencement de tubes selon l'une des revendications 1 ou 2,
**caractérisé en ce**
**qu'**au moins un élément fonctionnel (3) est réalisé séparément du corps de base (2).

6. Agencement de tubes selon la revendication 5, **caractérisé en ce que** l'élément fonctionnel (3) réalisé séparément du corps de base (2) est réalisé sous forme de soupape, soupape d'étranglement (3"'), soupape antiretour (3'), capteur, pompe, élément de liaison ou connecteur (3"").

7. Circuit de régulation de température, comprenant un agencement de tubes (1) selon l'une des revendications précédentes.

8. Circuit de régulation de température selon la revendication 7,
dans lequel le circuit de régulation de température est disposé dans un dispositif mobile.

9. Procédé de fabrication d'un agencement de tubes (1) pour le transport d'un fluide de régulation de température selon l'une des revendications 1 à 6, dans lequel l'agencement de tubes présente un corps de base (2) comportant plusieurs canaux (4), dans lequel au moins une paroi de canal (5) se trouve entre les canaux (4) dans laquelle une préforme en matériau polymère existante est fournie, dans lequel la préforme est disposée dans un moule de soufflage et l'agencement de tubes (1) est formé au moyen d'un procédé de moulage par soufflage, dans lequel le moule de soufflage est réalisé de telle sorte qu'au moins un élément fonctionnel (3) est moulé dans l'agencement de tubes (1).

10. Procédé de fabrication d'un agencement de tubes (1) pour le transport d'un fluide de régulation de température selon l'une des revendications 1 à 6, dans lequel l'agencement de tubes présente un corps de base (2) comportant plusieurs canaux (4), dans lequel au moins une paroi de canal (5) se trouve entre les canaux (4) dans laquelle sont fournis tout d'abord une préforme en matériau polymère existante et au moins un élément fonctionnel (3) à disposer à l'intérieur de l'agencement de tubes (1), dans lequel l'au moins un élément fonctionnel (3) est disposé à l'intérieur de la préforme, dans lequel la préforme comportant l'au moins un élément fonctionnel (3) disposé à l'intérieur est disposée dans un moule de soufflage et l'agencement de tubes (1) est formé au moyen d'un procédé de moulage par soufflage.

11. Procédé selon la revendication 10, **caractérisé en ce que** le moule de soufflage est réalisé de telle sorte que, pendant le moulage de l'agencement de tubes (1) au moyen du moulage par soufflage, au moins un élément fonctionnel (3) est moulé dans l'agencement de tubes (1).
